# EUROPEAN PATENT SPECIFICATION

(11) **EP 0 394 990 B1**
(45) Date of publication and mention of the grant of the patent: **17.09.1997**
(21) Application number: 90107823.8
(22) Date of filing: 25.04.1990
(51) Int. Cl.: G01N 27/333

(54) **Dry-operative ion-selective electrode**
Trockene, ionenselektive Elektrode
Electrode sèche à sélectivité d'ions

(30) Priority: 27.04.1989 JP 109538/89
(43) Date of publication of application: 31.10.1990
(73) Proprietor: KYOTO DAIICHI KAGAKU CO., LTD., Kyoto-shi Kyoto-fu (JP)
(72) Inventor: Yamaguchi, Tadao, Kyoto-shi, Kyoto-fu (JP); Katoh, Shigeru, Kyoto-shi, Kyoto-fu (JP); Taguchi, Takayuki, Shiga-ken (JP)
(74) Representative: von Kreisler, Alek, Dipl.-Chem.

(56) References cited:
- EP-A- 0 152 541
- EP-A- 0 230 573
- EP-A- 0 282 349
- GB-A- 2 217 461
- US-A- 4 053 381

## Description

The present invention relates to a dry-operative ion-selective electrode. In particular, the present invention relates to a dry-operative ion-selective electrode which can be prepared by forming an electrolyte layer and an ion-selective membrane on an electrode through screen printing.

Ion-selective electrodes are used for measuring a concentration of a specific ion contained in a liquid sample such as a body fluid (e.g. blood, urine, saliva, etc.) or water in environment. Among the ion-selective electrodes, recently, dry-operative ones are widely used since they can be used easily and have good accuracy.

In general, the dry-operative ion-selective electrode comprises a reference electrode, an electrolyte layer contacting to the reference electrode and an ion-selective membrane. One of the typical dry-operative ion-selective electrodes is disclosed in Japanese Patent Publication No. 4981/1983 and U.S. Patent Nos. 4,053,381 and 4,214,968. The disclosed dry-operative ion-selective member is prepared by depositing a metal layer on a plastic film, applying an electrolyte layer and an ion-selective membrane, drying them and cutting the film carrying the metal layer, the electrolyte layer and the ion-selective membrane to a suitable size to give a pair of ion-selective electrodes. In case of such ion-selective electrode, when a sample liquid supplied on the electrode for analysis flows over an edge of the ion-selective membrane, it may form a short circuit between the layers on the cut surface. To measure plural ion concentrations simultaneously, plural pairs of the electrodes are arranged in parallel. To spread the supplied liquid sample over all of the reference electrodes, a porous material for spreading the sample should be used, or the number of steps for producing the electrode increases. In addition, since the electrolyte layer and the ion-selective membrane are formed by coating methods, only a part of the produced laminate film has a uniform thickness and can be used for the production of the ion-selective electrodes. Therefore, such method is very wasteful.

One object of the present invention is to provide a dry-operative ion-selective electrode which can be economically prepared.

Another object of the present invention is to provide a method for producing a dry-operative ion-selective electrode whereby an electrolyte layer and an ion-selective membrane can be uniformly and efficiently formed.

These and other objects of the present invention are achieved by a dry-operative ion-selective electrode comprising a support plate (1), at least one pair of metal/metal salt layer electrodes (2) formed on said support plate (1), each having a reference electrode part at one end, a resist layer (3) covering said support plate (1) except said reference electrodes (2,4) and the other ends of the metal layer electrodes (2), and ion-selective membrane (5) formed on said reference electrodes (2,4) which further comprises an electrically non-conductive part at an area where said reference electrode (2,4) and said resist layer (3) meet each other, wherein the distance between an edge of said reference electrode (2,4) and the wall surface formed by said resist layer (3) is at least 0.2 mm and a method for producing a dry-operative ion-selective electrode, which comprises steps of:
forming at least one pair of metal layer electrodes (2) on a support plate (1),
masking each terminal part of said metal layer electrodes (2) with an electrically conductive paste,
printing a resist layer (3) so as to define reference electrodes (2,4) by leaving a gap between said electrode layers (2) and the formed resist layer (3) having a distance between an edge of said electrode layers (2) and the wall surface formed by said resist layer (3) of at least 0.2 mm;
chemically treating parts of said metal layer electrodes (2) corresponding to the reference electrodes (2,4) to generate metal salt layers and
forming an ion-selective membrane (5) onto each reference electrode (2,4).

Fig. 1 is a cross sectional view of a dry-operative ion-selective electrode according to the present invention,
Figs. 2A to 2D is an exploded perspective view of a dry-operative ion-selective electrode according to the present invention, and
Figs. 3A to 3D illustrate the mechanism for forming a layer with a uniform thickness.

In the present invention, a film or a sheet of an insulating material such as a plastic film is used as the support plate. As plastics, polyesters, polypropylene, acrylic resins, polyvinyl chloride and the like are preferred.

The electrode layer may be formed from electrically conductive metals such as silver, copper and aluminum. Among them, silver is preferred. The metal layer electrode can be formed by any of conventional method such as screen printing of a metal paste or metal deposition.

The terminal parts of the metal layer electrodes are masked with an electrically conductive layer. Then, a resist layer is printed on the support plate with leaving the reference electrode parts and the terminal parts uncoated with the resist layer. The resist layer act as a "wall" for restricting the electrolyte layer and the ion-selective membrane when they are formed on the reference electrode.

The wall of the resist layer is formed with a distance of at least 0.2 mm from the peripheral edge of the reference electrode to leave a space between the reference electrode and the wall. Such space is advantageous for forming the uniform ion-selective membrane. The reason for this will be explained later. When an electrically insulating part is provided at a portion where the resist layer and the reference electrode meet each other before the formation of the resist layer, it gives the same effect as the space formed between the reference electrode and the wall.

As insulating materials for the electrically non-conductive part, although commercially available insulating ink may be used, an electrically non-conductive metal paste is preferred in view of adhesivity and etching resistance. The electrically non-conductive metal paste is a metal paste having a small content of the metal.

As the resist material, commercially available insulating ink can be used. Examples of such ink are UV curable type ones such as ML 25089, ML 25094 and ED 450 SS (manufactured by Nippon Atison), STR 5320 (manufactured by Shinto Chemitron), DS-4 and INS-3 (manufactured by Jujo Kako) and FOC-35 (manufactured by Taiyo Ink Manufacturing), and thermosetting type ones such as STR-5110 (manufactured by Shinto Chemitron), HIPET 9300 (manufactured by Jujo Kako) and CR 420 G and CR 48 G (manufactured by Osaka Asahi Chemical). The present invention is not limited to these examples.

The resist layer may be formed by applying the insulating ink by screen printing and curing the resin by UV radiation in case of the UV curable type ink. The printing of the ink and curing are repeated till the resist layer having a desired thickness, for example, 30 to 300 µm, preferably 50 to 250 µm is obtained. In case of the thermosetting ink, the printed ink is heated to a temperature of 100 to 150°C instead of UV radiation.

The electrode parts defined by the resist layer are chemically treated to form a metal salt layer on the metal layers. The metal salt is usually a halide, preferably a chloride, although other salts may be formed.

Then, with utilizing the areas surrounded by the resist layer, the electrolyte layer and the ion-selective membrane are formed on each reference electrode. As disclosed in Japanese Patent Kokai Publication No. 106852/1982, the electrolyte layer may be neglected.

When an electrolytic solution is poured in the areas, a liquid film with a substantially uniform thickness is formed by surface tension. Therefore, when the liquid film is evaporated and dried without disturbing it, the electrolyte layer having a uniform thickness is formed at least over the reference electrode.

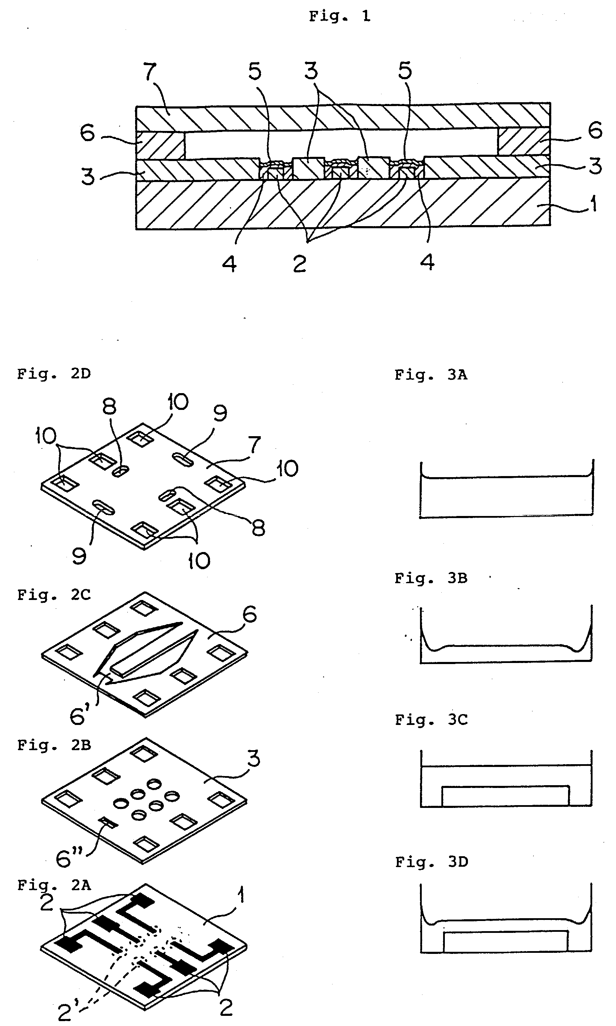

When a liquid is poured in a container, the liquid generally creeps up slightly along an inner wall of the container as shown in Fig. 3A. When the liquid is evaporated in such form, the inner portion is uniformly dried while the edge part is dried in such state that the liquid is dragged up by the portion contacting to the inner wall as shown in Fig. 3B.

When the wall is provided apart from the area on which the uniform film should be formed as shown in Fig. 3C and the poured liquid is evaporated and dried, the uniform film is formed in the center area covering the reference electrode although the peripheral area is dragged up along the wall. In the present invention, the electrolyte layer and the ion-selective membrane are uniformly formed in such manner.

The distance between the edge of the reference electrode and the wall is at least 0.2 mm, preferably at least 0.3 mm. When the distance is too larger, a volume of a wasted part increase. Then, the distance is preferably from 0.2 to 1.0 mm, more preferably from 0.3 to 0.5 mm.

The electrolyte may be a conventional one and preferably contains the same anion as that of the metal salt, although it contains an anion different from that of the metal salt. In some cases, the electrolyte may be neglected, and a polymer layer is formed between the reference electrode and the ion-selective membrane.

On the electrolyte layer, a solution of a material for the ion-selective membrane is poured and dried to form the ion-selective membrane having a uniform thickness. The material for the ion-selective membrane may be any of the conventional materials, for example, hydrophobic materials for the ion-selective membrane disclosed in Japanese Patent Kokai Publication No. 4981/1983 and U.S. Patent Nos. 4,053,381 and 4,214,968.

Now, the present invention will be illustrated by making reference to the accompanying drawings.

Fig. 1 shows a cross section of the dry-operative ion-selective electrode of the present invention.

The electrode of Fig. 1 comprises a support plate 1 made of a plastic film, electrode layers 2 formed on the support plate 1, a resist layer 3 formed on the support plate 1 and surrounding reference electrode parts of the electrode layers 2, electrolyte layers 4 and ion-selective membranes 5 laminated on the reference electrodes in the areas defined by the resist layer 3, a covering plate 7, and a second resist layer 6 interposed between the resist layer 3 and the covering plate 7 and forming a space between them.

The method for producing the dry-operative ion-selective electrode of Fig. 1 will be explained by making reference to Fig. 2.

As shown in Fig. 2A, on the plastic film support plate 1, an electrically conductive metal, preferably a silver paste is applied by a conventional method such as printing to form the electrode layers 2. The areas circled by dotted lines, which areas form the reference electrodes, may be chemically treated to convert the metal in the surface layers to the metal salt such as silver halide at this stage. Preferably, the metal in the circled areas are chemically treated after the resist layer 3 is formed.

Before the resist layer 3 is formed, the electrically non-conductive material is provided to a part where the conductive metal layer and the resist layer meet each other, whereby the ion-selective membrane having the uniform thickness is advantageously formed.

On the support plate having the electrode layers 2, the resist layer 3 as shown in Fig. 2B is formed and then the second resist layer 6 as shown in Fig. 2C is formed on the resist layer 3. At a part in the area 6' defined by the second resist layer 6 which part corresponds to a window 6" of the resist layer 3, a bridge (not shown) is provided.

At this stage, a quantity of an electrolytic solution is poured in the spaces on the reference electrode parts 2' surrounded by the resist layer 3 and then dried to form the electrolyte layers 4. On the formed electrode layers 4, a quantity of the solution of material for the ion-selective membrane is poured and dried to form the ion-selective membranes 5. Each of three pairs of the ion-selective membranes contain an ion carrier for one of three kinds of ions to be detected.

Finally, the cover plate 7 as shown in Fig. 2D is placed over the laminate to complete the dry-operative ion-selective electrode. The cover plate 7 has holes 8 for supplying the liquid to be analyzed, holes 9 for venting the air and holes 10 for exposing the electrode terminals.

When dents are formed on the inside surface of the cover plate 7 at parts corresponding to the windows of the second resist layer 6, the second resist layer 6 can be neglected.

When the liquid sample is analyzed with the dry-operative ion-selective electrode of the present invention, it is poured from one of the holes 8, while a reference liquid containing the ions at predetermined concentrations is poured from the other one of the holes 8. The poured liquid sample and the reference liquid spread in the space surrounded by the cover 7 and the resist layers 3 and 6 by capillarity, reach the reference electrodes 2 and are absorbed by the bridge to form a liquid junction.

Thereby, a cell is formed between each pair of the electrodes, and the electromotive force is measured. The ion concentration is determined from the electromotive force by means of a calibration line. When the electromotive force is measured with a voltmeter having the calibration line, the ion concentration can be directly read from the voltmeter.

The present invention will be explained further in detail by following examples, which do not limit the scope of the present invention.

### Example 1

### Production of Ion-Selective Electrode

An electrode was produced by the following steps.
1. On a polyester film, a thermosetting type silver paste (VO-200 manufactured by Nippon Atison) was printed through a printing plate of 200 mesh and 20 µm in thickness and heated at 150°C for 30 minutes to cure the paste to form silver layers. Each electrode part in the printed pattern had a width of 2.5 mm.
2. At terminal parts of the electrodes, a thermosetting carbon ink was printed through a printing plate of 200 mesh and 10 µm in thickness and heated at 150°C for 30 minutes to cure the carbon ink.
3. At parts where the resist layer and the electrodes met each other, a UV curable resist composition (ML-25089 manufactured by Nippon Atison) was printed through a printing plate of 300 mesh and 10 µm in thickness and irradiated with UV at an output of 6 kw to cure the resist composition.
4. The same UV curable resist composition was printed through a printing plate of 300 mesh and 40 µm in thickness. Such procedures were repeated three times to form a resist layer of about 50 µm in thickness. Each hole formed in the resist layer had a diameter of 3.2 mm.
5. By the same procedures as in the step 4 but changing the printing pattern, the second resist was formed.
6. The support plate carrying the electrodes and the resist layers was washed by immersing it in 3N nitric acid for one minute.
7. Then, the support plate was immersed in a chromic acid solution (1 % by weight of dichromic acid, 0.15 N hydrochloric acid and 0.2 N potassium chloride) for 3 minutes to form a silver chloride layer.
8. In each of the holes, 0.7 µl of a respective solution of a material for ion-selective membrane having the following composition was dropped and dried to form an ion-selective membrane. 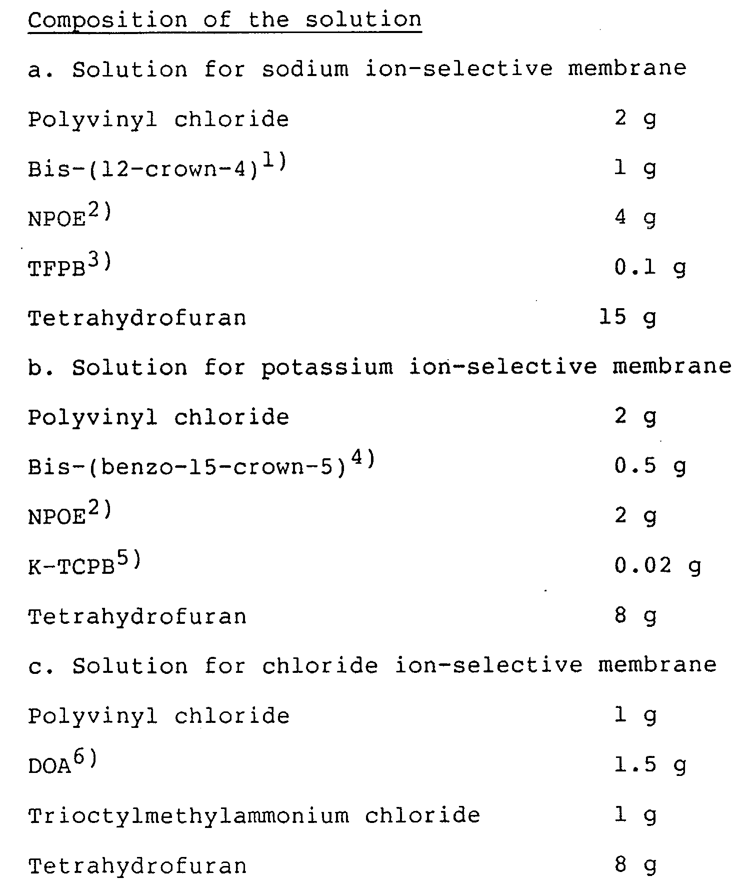 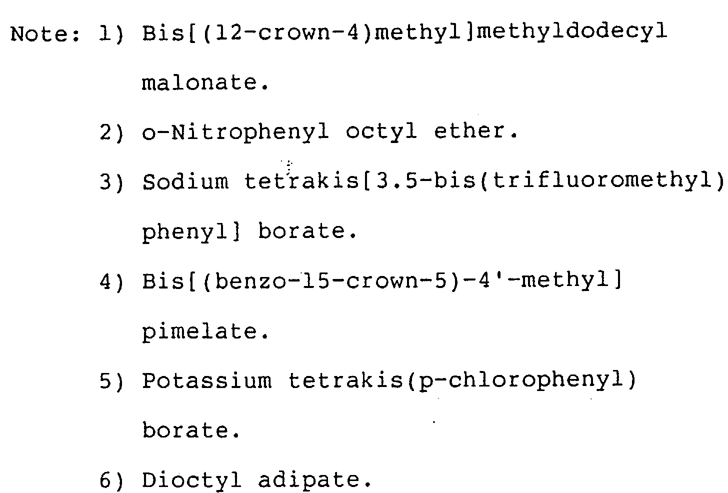
9. An aqueous solution of polyvinyl alcohol having a concentration of 10 g/dl was printed through a printing plate of 200 mesh and 50 µm in thickness and dried.
10. A polyester film was adhered and cut to a piece of 25 mm x 35 mm to obtain an electrode.

The number of electrodes to be produced in one time depends on a size of a screen printing machine.

### Example 2

With the electrode produced in Example 1, ions in serum was analyzed.

### Analysis

Through one of the holes for supplying the liquid, 20 µl of a standard solution containing sodium ions in a concentration of 50 meq/l, potassium ions in a concentration of 4 meq/l and chloride ions in a concentration of 100 meq/l was poured. Simultaneously, through the other one of the holes for supplying the liquid, 20 µl of serum for control was poured. After 2 minutes, generated voltages were measured. The results are as follows:

| | Voltage |
|---|---|
| Ion-selective electrode pair for sodium ion | -0.40 mV |
| Ion-selective electrode pair for potassium ion | 3.40 mV |
| Ion-selective electrode pair for chloride ion | -0.15 mV |

The concentrations of sodium ions, potassium ions and chloride ions in the control serum were 151.5 meq/l, 4.7 meq/l and 97.7 meq/l, respectively. The above results confirmed that the Nernst response was established in the electrode.

Above Examples do not limit the scope of the present invention, and various modifications and changes can be made in the technical scope of the present invention.

For example, the number of the electrode pairs may be one or more. Not only sodium, potassium and chloride ions but also lithium, calcium and carbonate ions can be measured by suitably selecting the ion carriers.

## Claims

1. A dry-operative ion-selective electrode comprising a support plate (1), at least one pair of metal/metal salt layer electrodes (2) formed on said support plate (1), each having a reference electrode part at one end, a resist layer (3) covering said support plate (1) except said reference electrodes (2,4) and the other ends of the metal layer electrodes (2), and ion-selective membrane (5) formed on said reference electrodes (2,4) which further comprises an electrically non-conductive part at an area where said reference electrode (2,4) and said resist layer (3) meet each other, wherein the distance between an edge of said reference electrode (2,4) and the wall surface formed by said resist layer (3) is at least 0.2 mm.

2. The dry-operative ion-selective electrode according to claim 1, which further comprises the electrolyte layer (4) between said reference electrode (2,4) and said ion-selective membrane (5).

3. The dry-operative ion-selective electrode according to claim 1, which further comprises a second resist layer (6) on said resist layer (3) and a covering plate (7) on said second resist layer (6).

4. A method for producing a dry-operative ion-selective electrode, which comprises steps of:
forming at least one pair of metal layer electrodes (2) on a support plate (1),
masking each terminal part of said metal layer electrodes (2) with an electrically conductive paste,
printing a resist layer (3) so as to define reference electrodes (2,4) by leaving a gap between said electrode layers (2) and the formed resist layer (3) having a distance between an edge of said electrode layers (2) and the wall surface formed by said resist layer (3) of at least 0.2 mm;
chemically treating parts of said metal layer electrodes (2) corresponding to the reference electrodes (2,4) to generate metal salt layers and
forming an ion-selective membrane (5) onto each reference electrode (2,4).

5. The method according to claim 4, wherein said metal layer electrodes (2) are formed by screen printing.

6. The method according to claim 4, which further comprises forming a second resist layer (6) on said resist layer (3) which defines the reference electrodes (2,4), halogenating metal at said reference electrodes (2,4), and placing a covering plate (7) on said second resist layer (6).

7. The method according to claim 4, which further comprises forming an electrically non-conductive part at an area where said reference electrode (2,4) and said resist layer (3) meet each other before forming said resist layer (3).

## Patentansprüche

1. Im trockenen Zustand arbeitende ionenselektive Elektrode, umfassend eine Trägerplatte (1), wenigstens ein Paar Metall/Metallsalzschicht-Elektroden (2), die auf der Trägerplatte (1) gebildet werden, wobei jede einen Referenzelektrodenteil an einem Ende aufweist, eine Resistschicht (3), die die Trägerplatte (1), außer den Referenzelektroden (2,4) und den anderen Enden der Metallschicht-Elektroden (2) bedeckt, und eine ionenselektive Membran (5), die auf den Referenzelektroden (2, 4) gebildet wird, die weiterhin einen elektrisch nichtleitfähigen Teil in einem Bereich umfaßt, in dem die Referenzelektrode (2,4) und die Resistschicht (3) einander treffen, worin der Abstand zwischen einer Kante der Referenzelektrode (2,4) und der Wandoberfläche, die durch diese Resistschicht (3) gebildet wird, wenigstens 0,2 mm beträgt.

2. Im trockenen Zustand arbeitende ionenselektive Elektrode gemäß Anspruch 1, die weiterhin die Elektrodenschicht (4) zwischen der Referenzelektrode (2,4) und der ionenselektiven Membran (5) umfaßt.

3. Im trockenen Zustand arbeitende ionenselektive Elektrode gemäß Anspruch 1, die weiterhin eine zweite Resistschicht (6) auf der Resistschicht (3) und eine Deckplatte (7) auf der zweiten Resistschicht (6) umfaßt.

4. Verfahren zur Herstellung einer im trockenen Zustand arbeitenden ionenselektiven Elektrode, umfassend die Stufen:
des Bildens wenigstens eines Paars der Metallschicht-Elektroden (2) auf einer Trägerplatte (1);
des Maskierens jedes Endteils der Metallschicht-Elektroden (2) mit einer elektrisch leitfähigen Paste;
des Druckens einer Resistschicht (3), um so Referenzelektroden (2,4) zu definieren, wobei eine Spalte zwischen den Elektrodenschichten (2) und der gebildeten Resistschicht (3) gelassen wird, die einen Abstand zwischen einer Kante der Referenzelektrode (2) und der Wandoberfläche, die durch diese Resistschicht (3) gebildet wird, von wenigstens 0,2 mm aufweist;
des chemischen Behandelns von Teilen der Metallschicht-Elektroden (2), die den Referenzelektroden (2,4) entsprechen, um Metallsalz-Schichten zu erzeugen, und
des Bildens einer ionenselektriven Membran (5) auf jeder Referenzelektrode (2, 4).

5. Verfahren gemäß Anspruch 4, worin die Metallschicht-Elektroden (2) durch Siebdruck gebildet werden.

6. Verfahren gemäß Anspruch 4, das weiterhin das Bilden einer zweiten Resistschicht (6) auf der Resistschicht (3), die die Referenzelektroden (2,4) definiert, das Halogenieren von Metall auf den Referenzelektroden (2,4) und das Anordnen einer Deckplatte (7) auf der zweiten Resistschicht (6) umfaßt.

7. Verfahren gemäß Anspruch 4, das weiterhin das Bilden eines elektrisch nicht-leitfähigen Teils in einem Bereich umfaßt, in dem die Referenzelektrode (2,4) und die Resistschicht (3) einander treffen, bevor die Resistschicht gebildet wird.

## Revendications

1. Electrode à sélection ionique et fonctionnant à sec comprenant une plaque (1) de support, au moins une paire d'électrodes (2) à couche de métal/sel de métal formée sur ladite plaque (1) de support, ayant chacune une partie d'électrode de référence à une extrémité, une couche de résist (3) recouvrant ladite plaque (1) de support sauf lesdites électrodes de référence (2, 4) et les autres extrémités des électrodes (2) à couche métallique, et une membrane (5) à sélection ionique formée sur lesdites électrodes de référence (2, 4) comprenant en outre une partie non électriquement conductrice au niveau d'une zone où ladite électrode de référence (2, 4) et ladite couche de résist (3) se rejoignent, la distance entre un bord de ladite électrode de référence (2, 4) et la surface de la paroi formée par ladite couche de résist (3) étant d'au moins 0,2 mm.

2. Electrode à sélection ionique et fonctionnant à sec selon la revendication 1, comprenant en outre une couche d'électrolyte (4) entre ladite électrode de référence (2, 4) et ladite membrane (5) à sélection ionique.

3. Electrode à sélection ionique et fonctionnant à sec selon la revendication 1, comprenant en outre une deuxième couche de résist (6) sur ladite couche de résist (3) et une plaque de recouvrement (7) sur ladite deuxième couche de résist (6).

4. Procédé de production d'une électrode à sélection ionique et fonctionnant à sec qui comprend les étapes suivantes :
formation d'au moins une paire d'électrodes (2) à couche de métal sur une plaque (1) de support,
masquage de chaque partie de borne desdites électrodes à couche métallique (2) avec une pâte électriquement conductrice,
impression d'une couche de résist (3) de manière à définir des électrodes de référence (2, 4) en laissant un intervalle entre lesdites couches d'électrode (2) et la couche de résist formée (3), avec une distance entre le bord desdites couches d'électrodes (2) et la surface de paroi formée par ladite couche de résist (3) d'au moins 0,2 mm;
traitement chimique de parties desdites électrodes à couche métallique (2) correspondant aux électrodes de référence (2, 4) pour générer des couches de sel de métal et
formation d'une membrane (5) à sélection ionique sur chaque électrode de référence (2, 4).

5. Procédé selon la revendication 4, dans lequel lesdites électrodes à couche de métal (2) sont formées par sérigraphie.

6. Procédé selon la revendication 4, qui comprend en outre
la formation d'une deuxième couche de résist (6) sur ladite couche de résist (3) qui définit les électrodes de référence (2, 4),
l'halogénation de métal au niveau desdites électrodes de référence (2, 4), et
disposition d'une plaque de recouvrement (7) sur ladite deuxième couche de résist (6).

7. Procédé selon la revendication 4, qui comprend en outre
la formation d'une partie électriquement non conductrice au niveau d'une zone où ladite électrode de référence (2, 4) et ladite couche de résist (3) se rejoignent avant la formation de ladite couche de résist (3).
